# EUROPEAN PATENT APPLICATION

(11) **EP 4 821 888 A1**
(43) Date of publication of application: **14.10.2026**
(21) Application number: 25168856.0
(22) Date of filing: 07.04.2025
(51) Int. Cl.: C01F 7/162, C01G 9/00

(54) **MIXED MAGNESIUM-ZINC-ALUMINIUM SPINELS WITH HIGH SURFACE AREA AND METHOD FOR THEIR PREPARATION**

(71) Applicant: Sasol Germany GmbH, 20537 Hamburg (DE)
(72) Inventor: Müller, Sven, 25524 Itzehoe (DE); Schrage, Christian, 22769 Hamburg (DE); Howe, Diane, 25746 Heide (DE); Kraus, Julia, 25715 Eddelak (DE)
(74) Representative: Müller Schupfner & Partner Patent- und Rechtsanwaltspartnerschaft mbB (Hamburg)

(57) **Abstract**

The present invention relates to a method of producing a mixed Al/Mg/Zn spinel material and to a mixed Al/Mg/Zn spinel material with high surface area which maintains good phase stability upon rehydration. The method involves preparing a) an Al/Mg mixed oxide precursor suspension by at least hydrolyzing an Al/Mg mixed alcoholate with water and b) separately preparing an Al/Zn mixed oxide precursor suspension by hydrolyzing an Al alcoholate using a mixture comprising water and a water-insoluble Zn compound and hydrothermal treating the same, combining a) and b), drying and calcining to obtain the Al/Mg/Zn spinel material.

## Description

The present invention relates to a method of producing a mixed Al/Mg/Zn spinel material and to a mixed Al/Mg/Zn spinel material with high surface area which maintains good phase stability upon rehydration. The method involves preparing a) an Al/Mg mixed oxide precursor suspension by at least hydrolyzing an Al/Mg mixed alcoholate with water and b) separately preparing an Al/Zn mixed oxide precursor suspension by hydrolyzing an Al alcoholate using a mixture comprising water and a water-insoluble Zn compound and hydrothermal treating the same, combining a) and b), drying and calcining to obtain the Al/Mg/Zn spinel material.

### BACKGROUND

Phase-pure spinels are suitable support materials for numerous catalytic reactions in petroleum processing, such as ethanol steam reforming, ethanol condensation, propane dehydration (PDH), chemical looping combustion, chemical looping reforming (CLR), dry reforming of methane, methanation or butane dehydrogenation. In addition, they may be used as supports for catalytic exhaust reactions, like SOx abatement, NOx storage or NOx reduction (NSR).

Spinels may be described by the general formula AB₂O₄, whereas A is a chemical element selected from one or more members of the group Mg, Zn, Cu, Ni, Co, Mn, Ca and Fe and B is a chemical element selected from one or more members of the group Al, Fe, Co, Mn, La, Ce and Cr. Spinels may be obtained by calcination of appropriate precursors, for example, hydrotalcites. These hydrotalcites may be prepared by co-precipitation methods or by the hydrolysis of the alcoholate of two or more compounds. Examples for the synthesis of hydrotalcites and spinels consisting of two metals A and B from metal alcoholates are given in EP0807086 B1.

A high surface area and a high pore volume of the catalyst carrier are prerequisites for a high activity of the catalyst. They allow a good dispersion of the catalytically active compound and deliver enough uptake capacity for the reactants. However, the spinel materials obtained by precipitation methods show low surface areas and pore volumes. Furthermore, when using metal salts contaminants cannot be avoided, and so catalyst purity may be compromised.

### SUMMARY OF THE INVENTION

The current invention relates to a method for preparing high-purity mixed magnesium-zinc-aluminium spinels which maintain good phase stability upon rehydration. Spinels primarily find application in an aqueous environment. Upon hydration, in particular, if the hydration involves a hydrothermal treatment, spinels produced by the methods of the prior art have the propensity to return to their "hydrated" precursor state prior to calcination (e.g., to a hydrotalcite). The spinels produced according to the current invention show better stability upon hydrothermal treatment. Other essential properties relevant to catalyst supports, such as high surface area, large pore volume, thermostability and basicity, are preserved by this novel synthesis method.

According to a first aspect of the invention, there is provided a method of producing a mixed Al/Mg/Zn spinel material, the method comprising the steps of:
i) preparing an Al/Mg mixed alcoholate;
ii) preparing an Al/Mg mixed oxide precursor suspension by hydrolyzing the Al/Mg mixed alcoholate with water;
iii) preparing an Al/Zn mixed oxide precursor suspension by hydrolyzing an Al alcoholate using a mixture comprising water and a water-insoluble Zn compound;
iv) preparing a hydrothermally treated Al/Zn mixed oxide precursor suspension by hydrothermally treating the Al/Zn mixed oxide precursor suspension;
v) preparing a spinel precursor suspension by mixing the Al/Mg mixed oxide precursor suspension and the hydrothermally treated Al/Zn mixed oxide precursor suspension;
vi) preparing an Al/Mg/Zn spinel precursor by drying the spinel precursor suspension;
vii) preparing the mixed Al/Mg/Zn spinel material by calcining the Al/Mg/Zn spinel precursor.

The mixed Al/Mg/Zn spinel material may be of the general formula MgₓZn₁₋ₓAl₂O₄, where x is in the range between 0 and 0.99, preferably in the range between 0.1 and 0.95 or more preferably in the range between 0.55 and 0.95.

The Al/Mg mixed alcoholate may be prepared by dissolving Al metal and Mg metal in alcohol, either simultaneously or separately, followed by mixing, or by dissolving Mg metal in an Al alcoholate dissolved in excess alcohol, the Al alcoholate having been obtained by dissolving Al metal in an alcohol. The metal(s) in the alcohol may be subjected to heating to about 160°C.

The weight ratio of Al to Mg in the Al/Mg mixed alcoholate may be in the range between 80 - 70 wt.% : 20 - 30 wt.% calculated on the basis of Al₂O₃ and MgO, preferably in the range between 76 - 72 wt. % : 24 - 28 wt. % calculated on the basis of Al₂O₃ and MgO, respectively. Most preferably, the ratio of Al to Mg in the Al/Mg mixed alcoholate may be 73.5 wt.% : 26.5 wt.% calculated on the basis of Al₂O₃ and MgO, respectively.

The Al metal may take any form, preferably granules, needles or ingots.

The purity of the Al metal (based on mass) may be higher than 90 %, preferably higher than 99 %, more preferably higher than 99.9 % and most preferably higher than 99.99 %.

The Mg metal may take any form, preferably granules or ingots.

The purity of the Mg metal (based on mass) may be higher than 90%, preferably higher than 99 %, more preferably higher than 99.9 % and most preferably higher than 99.99 %.

The alcohols used for dissolving the Al and Mg metals may have a carbon chain length of between 1 and 40 carbon atoms, preferably between 1 and 20 carbon atoms. More preferably, the alcohols have a carbon chain length of between 4 and 8 C atoms. Preferably, primary alcohols are used. In one embodiment, hexanol is used. It will be appreciated that when the Al metal and Mg metal are dissolved in alcohol separately followed by mixing, different alcohols might be used for dissolving each of the Al and Mg metals.

The hydrolysis reaction may be conducted at a temperature of between 20 and 120°C, preferably between 80 and 110°C, more preferably between 85 and 95°C. The hydrolysis reaction may proceed under stirring.

An acid, preferably nitric or acetic acid, or a base, preferably a base containing N and more preferably ammonia, may be added to the water for hydrolysis. The concentration of the acid or the base may be in the range between 0.05 and 1 wt.%.

The weight ratio of Al to Zn in the Al/Zn mixed oxide precursor may be in the range between 60 - 50 wt.% : 40 - 50 wt.% calculated on the basis of Al₂O₃ and ZnO, preferably in the range between 58 - 54 wt. % : 42 - 46 wt. % calculated on the basis of Al₂O₃ and ZnO, respectively. Most preferably, the ratio of Al to Zn in the Al/Zn mixed oxide precursor may be 56 wt.% : 44 wt.% calculated on the basis of Al₂O₃ and ZnO, respectively.

The water-insoluble Zn compound may be any compound comprising Zn²⁺ ions, including zinc oxide, zinc carbonate, or zinc hydroxide carbonate. Preferably, the Zn compound is zinc oxide. The zinc oxide may have a d₉₀ value < 40 µm, and more preferably < 20 µm. The zinc oxide may have a surface area in the range of 4 - 10 m²/g. The zinc oxide will typically have a low level of impurities. More particularly, impurities such as Ca, Cr, Cu, Fe, Ga, La, Mn, Na, Ni, Si, Ti, V, Zr, Pb may be below 50 ppm each.

Zinc metal is known not to dissolve in alcohol. Zinc oxide provides a source of uncontaminated zinc for the formation of an Al/Zn mixed oxide precursor suspension using an Al alcoholate.

The hydrothermal treatment of the Al/Zn mixed oxide precursor suspension may be performed under autogenous pressure at a temperature between 20 and 350°C. preferably between 100 and 200°C and more preferably between 170 and 190°C. The hydrothermal treatment may be performed for a time between 30 minutes and 10 hours, preferably between 1 hours and 5 hours, most preferably for 1 hour. The hydrothermal treatment may be performed with stirring. The solid content of the Al/Zn mixed oxide precursor suspension may be in the range of 1 - 20 wt.%, preferably in the range of 7 - 11 wt.%.

During hydrothermal treatment, an Ostwald ripening occurs accompanied by a structural reorganization of the Al/Zn mixed oxide precursor suspension and a dissolution of the water-insoluble Zn compound, e.g. zinc oxide, which results in the incorporation of Zn into the hydrothermally treated Al/Zn mixed oxide precursor in a homogeneous manner.

The mixing of the Al/Mg mixed oxide precursor suspension and the hydrothermally treated Al/Zn mixed oxide precursor suspension may be performed under stirring at a temperature of between 10 and 100°C, preferably between 10 and 30°C, for 30 minutes to 3 hours, preferably for 1 hour.

The drying of the spinel precursor suspension may be performed using any drying technique, preferably by spray-drying. Where spray-drying is performed, this may be done at an outlet temperature of between 90 and 130°C, preferably at 110°C.

The calcination of the Al/Mg/Zn spinel precursor may be performed at a temperature between 500 and 1500°C, preferably between 500 and 700°C, more preferably at 550°C, for 1 to 24 hours, preferably for 2 to 5 hours and more preferably for 3 hours, e.g. using a muffle furnace or a rotary kiln.

According to a second aspect of the invention, there is provided a mixed Al/Mg/Zn spinel material having the following characteristics:
i) a composition according to formula (1):

   MgₓZn₁₋ₓAl₂O₄ (1)
where x is in the range between 0 and 0.99, preferably in the range between 0.1 and 0.95 or more preferably in the range between 0.55 and 0.95; and ii) a Relative Spinel Content, R, after rehydration via hydrothermal treatment at 200°C for 2 hours, of more than 60 %.

Such mixed Al/Mg/Zn spinel material is obtainable according to the method described under the first aspect of the invention.

The Relative Spinel Content, R, is determined after rehydration via hydrothermal treatment of the mixed Al/Mg/Zn spinel material at 200°C for 2 hours. For example, 6 g of powder of the mixed Al/Mg/Zn spinel material is mixed with 80 g of water. After the treatment at 200°C for 2 hours under autogenous pressure, the residual powder is dried at 120°C for 12 hours.

The Relative Spinel Content, R, is determined by powder diffraction via the Reference Intensity Ratio (RIR) method, as described in Hillier, Clay Minerals (2000) 35, 291-302, by using for example, the Sleve+ Modul included in the PDF4+ (V4.23.0.3, 2023) Software from ICDD.

In its most general form, a Reference Intensity Ratio (RIR) is given by equation (2): ${RIR}_{i , s} = \left(\frac{{X}_{s}}{{X}_{i}}\right) \left(\frac{{I}_{\left(hkl\right) i}}{{I}_{{\left(hkl\right)}_{s}^{′}}}\right) \left(\frac{{I}_{{\left(hkl\right)}_{s}^{′}}^{rel}}{{I}_{\left(hkl\right) i}^{rel}}\right)$ (2) where
Xₛ is the weight fraction of the standard phase
Xᵢ is the weight fraction of phase I
I₍ₕₖₗ₎ᵢ is the intensity of the (hkl) reflection of phase I
I_{(hkl)'s} is the intensity of the (hkl) reflection of the standard phase
I^{rel}_{(hkl)'s} is the Relative Intensity of the (hkl) reflection of the standard phase
I^{rel}_{(hkl)'i} is the Relative Intensity of the (hkl) reflection of phase I

When the reference material (i.e. standard phase) is Corundum and the intensity ratio is determined according to convention from the most intensive Corundum reflection (I₍₁₁₃₎, _{cor}) and from the most intense reflection from phase I (I₍ₕₖₗ₎ᵢ) in a 50:50 mixture by weight (i.e. the ratio of the Relative Intensity of Corundum (the standard phase) and of the Relative Intensity of the I phase is 1:1), RIR values are known as RIR_{cor}. In terms of RIR_{cor}, the weight fraction of any phase I in a sample spiked with a known amount of Corundum as the standard phase is then given by equation (3): ${X}_{i} = \left(\frac{{X}_{cor}}{{RIR}_{cor}}\right) \left(\frac{{I}_{\left(hkl\right) i}}{{I}_{\left(113\right) cor}}\right)$ (3) where
Xᵢ is the weight fraction of phase I
X_{Cor} is the weight fraction of Corundum
RIR_{cor} is the Reference Intensity Ratio of Corundum
I₍ₕₖₗ₎ᵢ is the intensity of the most intense (hkl) reflection of phase I
I_{(113)cor} is the intensity of the (113) reflection of the Corundum phase

As X_{cor} and RIR_{cor} are constant values, the weight fraction of phase I is proportional to the intensity ratio of the most intense reflection of component I and the (113) reflection (being the most intensive reflection) of Corundum. When I is the spinel phase, the weight fraction of the spinel phase Xₛₚᵢₙₑₗ (in other words, the Relative Spinel Content, R) can be calculated from the intensity of the (311) reflection I₍₃₁₁₎ₛₚᵢₙₑₗ, being the most intense reflection for the spinel phase, using the equation (4): $R = \left(\frac{{X}_{cor}}{{RIR}_{cor}}\right) \left(\frac{{I}_{\left(311\right) spinel}}{{I}_{\left(113\right) cor}}\right)$ (4)

The amount of spinel, Xₛₚᵢₙₑₗ, or Relative Spinel Content R, is determined after rehydration of the composition according of formula MgₓZn₁₋ₓAl₂O₄ via hydrothermal treatment at 200°C for 2 hours as follows: 6 g of powder of the mixed Al/Mg/Zn spinel material is mixed with 80 g of water. After the treatment at 200°C the residual powder is dried at 120°C for 12 hours.

An X-ray diffraction pattern is obtained after the above-mentioned hydrothermal treatment from which the intensity of the spinel reflex (i.e. I₍₃₁₁₎ₛₚᵢₙₑₗ ) at 2Θ = 37° is derived.

For the mixed Al/Mg/Zn spinel material of the invention, the Relative Spinel Content, R amount of spinel (X_{Spinel}) after rehydration shows values of more than 60%.

The mixed Al/Mg/Zn spinel material may be phase pure (i.e. just the spinel phase is detected in an X-ray diffraction pattern obtained on the mixed Al/Mg/Zn spinel material), with an absence of any MgO and /or NaNO₃ reflexes at 43°2θ (MgO) or 29°2θ (NaNO₃).

The mixed Al/Mg/Zn spinel material may have impurities comprising the following elements Ca, Cr, Cu, Fe, Ga, La, Mn, Na, Ni, Si, Ti, V, Zr, Pb below 100 ppm each.

The mixed Al/Mg/Zn spinel material may have a surface area between 50 and 300 m²/g, preferably between 100 and 250 m²/g.

The mixed Al/Mg/Zn spinel material may have a pore volume between 0.15 and 1.0 ml/g, preferably between 0.2 and 0.7 ml/g.

The mixed Al/Mg/Zn spinel material may have a median pore radius of between 20 and 60 Å, preferably between 30 and 50 Å.

The above values for surface area, pore radius, and pore volume may be determined after a calcination step performed on an Al/Mg/Zn spinel precursor at 550°C for 3 hours.

The mixed Al/Mg/Zn spinel material may have a surface area after calcination at 650°C for 3 hours between 90 and 230 m²/g. The mixed Al/Mg/Zn spinel material may have a surface area after calcination at 850°C for 3 hours between 30 and 150 m²/g. The mixed Al/Mg/Zn spinel material may have a surface area after calcination at 1050°C for 3 hours between 10 and 65 m²/g.

The analytical methods to be used for determining the above parameters are described under "Analytical Methods and Definitions".

### DETAILED DESCRIPTION OF THE INVENTION

The invention will now be described in more detail with reference to the following non-limiting examples and the following figures:
Fig. 1: X-ray diffraction pattern of the product obtained by Example 3;
Fig. 2: X-ray diffraction pattern of the product obtained by Example 3 before (upper line) and after (lower line) hydrothermal treatment at 200°C for 2 hours.

### Analytical Methods and Definitions

The X-ray diffraction pattern is measured with X'Pert from PANalytical with X'Celerator Cu radiation.

The chemical purity and composition are measured by inductively coupled plasma optical emission spectroscopy (ICP-OES) with the device SPECTROBLUE from SPECTRO. Prior to the measurement, the sample is digested in the microwave MARS 5 from CEM.

The surface area is determined according to DIN ISO 9277 for the relative pressure range between 0.05 and 0.3 p/p0 using a Quadrasorb apparatus from Quantachrome.

The pore radius distribution and the pore volume are determined according to DIN 66133 using an Autopore IV 9500 porosimeter from Micromeritics.

### E1 Example 1 (Steps iii) and iv)): Preparation of a hydrothermally-treated Al/Zn Mixed Oxide Precursor Suspension

In a three-neck flask, zinc oxide (99% ZnO) was suspended under stirring (300 rpm) in an aqueous solution of acetic acid (0.1 g acid/g Al₂O₃) and the suspension was heated to 90°C. After heating 20 minutes, one third of the required amount of a solution of aluminium hexanolate in hexanol (10.56 % Al₂O₃) was added under stirring. The required amount of aluminium hexanolate was dictated by a mass ratio of aluminium hexanolate to hydrolysis water of 1:1.2. After 15 minutes, a second third of the aluminium hexanolate solution was added, and after a further 15 minutes the final third thereof was added. Stirring was continued at 90°C for a further 15 minutes. Most of the hexanol was decanted and the remaining amount is removed by water vapor distillation. The obtained suspension (7.7 % total oxide content) was hydrothermally aged for 1 hour at 180°C in an autoclave under stirring (500 rpm) and a hydrothermally-treated Al/Zn slurry (44 % ZnO on a water-free basis) was obtained.

### E2 Example 2 (Steps i) and ii)): Preparation of the Al/Mg Mixed Oxide Precursor Suspension

In a three-neck flask an aqueous solution of ammonia (0.2 wt.-% NH₃) was heated to 90°C. After heating 20 minutes, one third of the required amount of a solution of magnesium aluminium hexanolate in hexanol (6.83 % Al₂O₃, 2.70 % MgO, mass ratio of magnesium aluminium hexanolate and hydrolysis water was 1:2) was added under stirring. The magnesium aluminium hexanolate was obtained according to EP0807086 B1. After 15 minutes, the second third of the hexanolate was added and after further 15 minutes the final part. After decanting most of the hexanol and removing the remaining amount by water vapor distillation, the Al/Mg slurry (5.2 % total oxide content, 26 % MgO on a water-free basis) was obtained.

### E3 Example 3 (Steps (v)-(vii)): Preparation of the spinel-type Mg_{0.74}Zn_{0.26}Al₂O₄

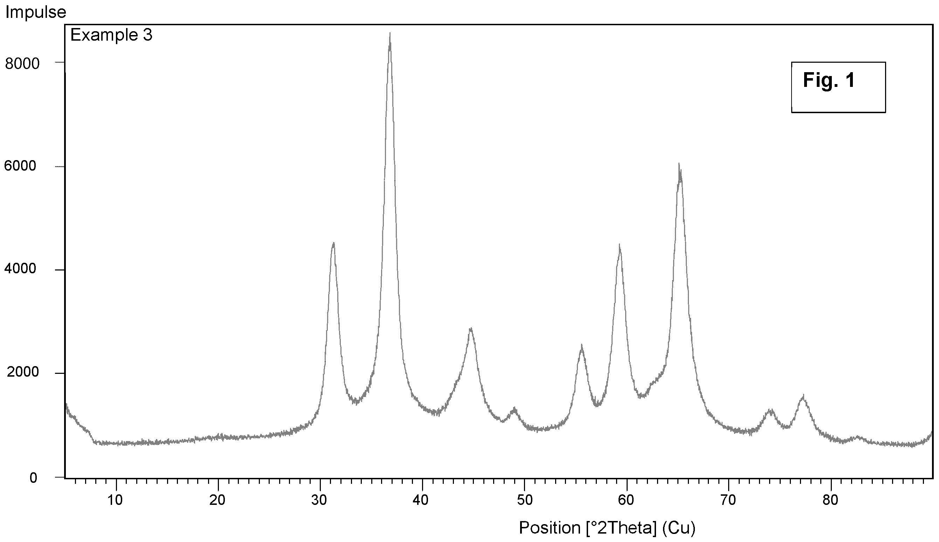

30 mass-% of the hydrothermally-treated Al/Zn slurry (obtained in Example 1) and 70 mass-% of the Al/Mg slurry (obtained in Example 2) were mixed and the mixture was stirred for one hour at room temperature. The mixture was dried using a laboratory spray-drier (inlet temperature 220°C, outlet temperature 110°C). The so-obtained powder was calcined at 550°C for 3 hours in a muffle furnace. The resulting mixed oxide had a surface area of 215 m²/g, a crystallite size of 70 Å and a basicity of 1.1 µmol/m², as measured by ASTM D4824-03 but using CO₂ instead of Ammonia. The XRD is shown in Figure 1. The spinel reflex can be seen at 2Θ = 37° (311 plane). The content of chemical impurities is shown in **Table 2.** The Relative Spinel Content, R, after rehydration via hydrothermal treatment at 200°C for 2 hours was 83 %.

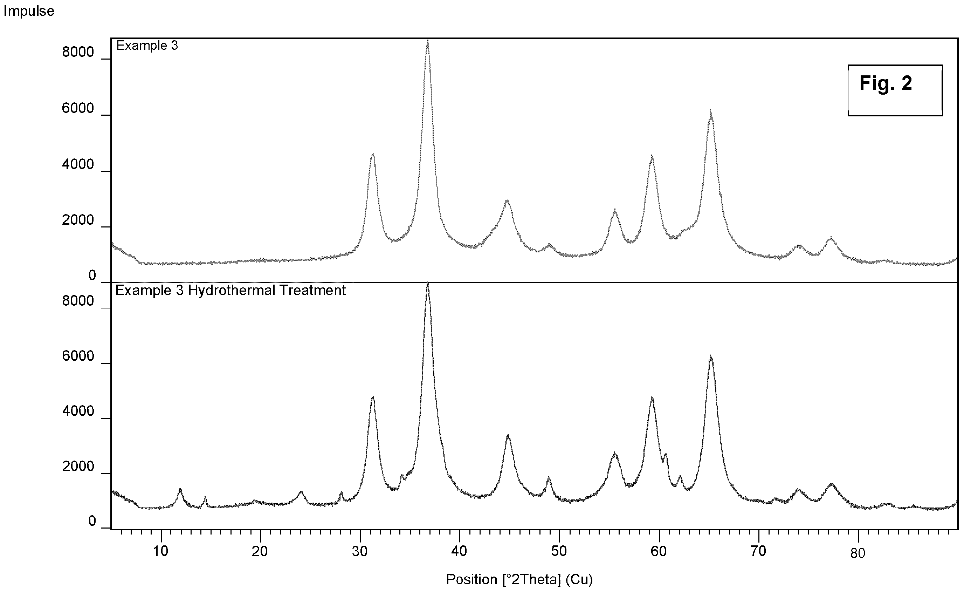

6 g of a powder of the mixed oxide product obtained was mixed with 80 g of water and hydrothermally treated at 200°C for 2 hours. After the treatment at 200°C, the residual powder was dried at 120°C for 12 hours. During hydrothermal treatment, boehmite and hydrotalcite impurities were formed as some of the spinel product rehydrates. The X-ray diffraction pattern before and after the hydrothermal treatment is shown in Figure 2 (in the lower part of Figure 2 after hydrothermal treatment), in addition to the X-ray diffraction pattern of the spinel reflexes (e.g. with a strong reflex at 2Θ = 37° (311 plane)), a reflex at 2Θ = 12°, which is characteristic of the hydrotalcite phase (003 plane), and a reflex at 2Θ = 14°, which is characteristic of the Boehmite phase (020 plane), were present.

### E4 Example 4 (Further Examples)

Example 3 was repeated with different mass percentages/ratios of the hydrothermally-treated Al/Zn slurry (from Example 1) and Al/Mg slurry (from Example 2) to give different x values according to the formula (1):

MgₓZn₁₋ₓAl₂O₄ (1)

Each product was not only calcined at 550°C for 3 hours, but also at 650°C, 850°C for 3 hours and at 1050°C for 3 hours in a muffle furnace. The properties of the obtained materials (having different x values) as they vary with calcination temperature are shown in **Table 1A** and **Table 1B,** with Example 3 (i.e. 30 mass-% Al/Zn slurry and 70 mass-% Al/Mg slurry) reflected in the third row of each (i.e. x = 0.74). The amount of spinel (Relative Spinel Content R) after rehydration is shown in **Table 3.**

**Table 1A: Material properties at calcination temperature 550°C and 650°C**

| **X: Experiment** | **550°C** | | | **650°C** | | |
|---|---|---|---|---|---|---|
| | **Surface area [m²/g]** | **Pore volume [ml/g]** | **Pore radius [nm]** | **Surface area [m²/g]** | **Pore volume [ml/g]** | **Pore radius [nm]** |
| 0.92: E4 | 238 | 0.57 | 4.7 | 229 | 0.52 | 4.1 |
| 0.83: E4 | 230 | 0.51 | 3.7 | 184 | 0.5 | 4.5 |
| 0.74: E3 | 215 | 0.38 | 3.2 | 173 | 0.38 | 3.9 |
| 0.55: E4 | 176 | 0.31 | 3.3 | 137 | 0.34 | 4.2 |
| 0.12: E4 | 121 | 0.22 | 3.0 | 95 | 0.21 | 3.7 |
| 0.74: C1 | 188 | 0.25 | 2.5 | 167 | 0.27 | 2.9 |
| 0.74: C2 | 18 | 0.07 | 5.6 | 23 | 0.11 | 7.6 |
| 0.74: C3 | 228 | 0.39 | 2.8 | 163 | 0.39 | 3.7 |

**Table 1B: Material properties at calcination temperature 850°C and 1050°C**

| **X : Experiment** | **850°C** | | | **1050°C** | | |
|---|---|---|---|---|---|---|
| | **Surface area [m²/g]** | **Pore volume [ml/g]** | **Pore radius [nm]** | **Surface area [m²/g]** | **Pore volume [ml/g]** | **Pore radius [nm]** |
| 0.92: E4 | 131 | 0.48 | 5.9 | 54 | 0.35 | 10.9 |
| 0.83: E4 | 133 | 0.45 | 5.1 | 36 | 0.25 | 11.7 |
| 0.74: E3 | 107 | 0.4 | 6.0 | 27 | 0.2 | 12.1 |
| 0.55: E4 | 77 | 0.32 | 6.9 | 28 | 0.17 | 11.3 |
| 0.12: E4 | 35 | 0.2 | 9.6 | 18 | 0.14 | 13.6 |
| 0.74: C1 | 103 | 0.22 | 3.5 | 47 | 0.11 | 3.6 |
| 0.74: C2 | 21 | 0.14 | 15.0 | 7 | 0.14 | 13.5 |
| 0.74: C3 | 68 | 0.34 | 6.9 | 37 | 0.29 | 11.8 |

### C1 Comparative Example 1: Precipitation of Mg_{0.74}Zn_{0.26}Al₂O₄ using ammonia

Magnesium nitrate, zinc nitrate and aluminium nitrate were dissolved in water in a ratio to get the required composition of Mg_{0.74}Zn_{0.26}Al₂O₄. The total concentration of all nitrates in the solution was 2.1 mol/l. An aqueous ammonia solution (25 wt.-% of NH₃) was added dropwise over a period of 10 minutes under stirring at 450 rpm (5.5 mol ammonia per mol nitrate). The obtained suspension (pH = 9.1) was stirred for 30 minutes at room temperature. The solid was separated by filtration and dried overnight at 120°C.

### C2 Comparative Example 2: Precipitation of Mg_{0.74}Zn_{0.26}Al₂O₄ using sodium hydroxide

Magnesium nitrate, zinc nitrate and aluminium nitrate were dissolved in water in a ratio to get the required composition of Mg_{0.74}Zn_{0.26}Al₂O₄. The total concentration of all nitrates in the solution was 2.1 mol/l. An aqueous sodium hydroxide solution (8 wt.-% of NaOH) was added in three portions under stirring at 450 rpm (2.6 mol NaOH per mol nitrate). The obtained suspension (pH = 9.5) was stirred for 30 minutes at room temperature. The solid was separated by filtration, washed with water and dried overnight at 120°C.

### C3 Comparative Example 3: Precipitation of Mg_{0.74}Zn_{0.26}Al₂O₄ according to EP 0807086 B1 using Zn-isopropoxide

A 9 wt.% suspension of zinc-isopropoxide (which was used instead of zinc ethanolate, in view of this being commercially not obtainable) is prepared with hexanol in a beaker. This mixture is mixed with the required amount of a solution of magnesium aluminium hexanolate prepared according to EP0807086 B1 in hexanol (7.34 % Al₂O₃, 1.95 % MgO). In a three-neck flask water is heated to 90°C. After heating one third of the magnesium aluminium hexanolate mixture is added to the water under stirring. After 15 minutes a second third of the magnesium aluminium hexanolate mixture is added and after a further 15 minutes the final part thereof is added to the water (mass ratio of magnesium aluminium hexanolate to hydrolysis water is 1:2). Stirring was continued at 90°C for a further 15 minutes. Most of the hexanol was decanted and the remaining amount was removed by water vapor distillation. An Al/Mg/Zn slurry is obtained. The mixture is dried using a laboratory spray-drier (inlet temperature 220°C, outlet temperature 110°C).

Comparative data for the Relative Spinel Content R after hydrothermal treatment at 200°C for 2 hours of the products obtained in Comparative Examples 1-3 as compared with that of Example 3 are provided in Table 3.

**Table 2: Impurity contents of the product obtained by Example 3**

| Element | Content [ppm] |
|---|---|
| Ca | 53 |
| Cr | 2 |
| Cu | <2 |
| Fe | 55 |
| Ga | 33 |
| La | <2 |
| Mn | 24 |
| Na | 17 |
| Ni | <2 |
| Si | 95 |
| Ti | 15 |
| V | 37 |
| Zr | 2 |
| Pb | <10 |

**Table 3: Rehydration stability according to the RIR**

| X : Experiment | Relative Spinel Content R [%] |
|---|---|
| 0.92: E4 | 71 |
| 0.83: E4 | 89 |
| 0.74: E3 | 83 |
| 0.55: E4 | 97 |
| 0.12: E4 | 100 |
| 0.74: C1 | 58 |
| 0.74: C2 | 51 |
| 0.74: C3 | 50 |

## Claims

1. A method of producing a mixed Al/Mg/Zn spinel material, the method comprising the steps of:
i) preparing an Al/Mg mixed alcoholate;
ii) preparing an Al/Mg mixed oxide precursor suspension by hydrolyzing the Al/Mg mixed alcoholate with water;
iii) preparing an Al/Zn mixed oxide precursor suspension by hydrolyzing an Al alcoholate using a mixture comprising water and a water-insoluble Zn compound;
iv) preparing a hydrothermally treated Al/Zn mixed oxide precursor suspension by hydrothermally treating the Al/Zn mixed oxide precursor suspension;
v) preparing a spinel precursor suspension by mixing the Al/Mg mixed oxide precursor suspension and the hydrothermally treated Al/Zn mixed oxide precursor suspension;
vi) preparing an Al/Mg/Zn spinel precursor by drying the spinel precursor suspension;
vii) preparing the mixed Al/Mg/Zn spinel material by calcining the Al/Mg/Zn spinel precursor.

2. The method of claim 1, wherein the mixed Al/Mg/Zn spinel material has the general formula MgₓZn₁₋ₓAl₂O₄, where x is in the range between 0 and 0.99, preferably in the range between 0.1 and 0.95 and more preferably in the range between 0.55 and 0.95.

3. The method of claim 1 or claim 2, wherein the Al/Mg mixed alcoholate is prepared by dissolving Al metal and Mg metal in alcohol, either simultaneously or separately followed by mixing.

4. The method of claim 1 or claim 2, wherein the Al/Mg mixed alcoholate is prepared by dissolving Mg metal in an Al alcoholate, the Al alcoholate having been obtained by dissolving Al metal in an alcohol.

5. The method of claim 3 or claim 4, wherein the purity of the Al metal is higher than 90%, preferably higher than 99 %, more preferably higher than 99.9 % and most preferably higher than 99.99 %.

6. The method of any one of claims 3 to 5, wherein the purity of the Mg metal is higher than 90%, preferably higher than 99 %, more preferably higher than 99.9 % and most preferably higher than 99.99 %.

7. The method as claimed in any one of the preceding claims, wherein a ratio of Al to Mg in the Al/Mg mixed alcoholate calculated on the basis of Al₂O₃ and MgO respectively is in the range between 80 - 70 wt.% : 20 - 30 wt.%, preferably in the range between 76 - 72 wt.% : 24 - 28 wt.% and most preferably 73.5 wt.% : 26.5 wt.%.

8. The method as claimed in any one of the preceding claims, wherein the hydrolyzing of the Al/Mg mixed alcoholate or the Al alcoholate is conducted at a temperature of between 20 and 120°C, preferably between 80 and 110°C, more preferably between 85 and 95°C.

9. The method as claimed in any one of the preceding claims, wherein the hydrolyzing of the Al/Mg mixed alcoholate or the Al alcoholate is conducted in the presence of an acid, preferably nitric or acetic acid, or a base, preferably a base containing nitrogen, and more preferably ammonia, which is added to the water.

10. The method as claimed in Claim 9, wherein a concentration of the acid or the base is in the range between 0.05 and 1 wt.%.

11. The method as claimed in any one of the preceding claims, wherein a ratio of Al to Zn in the Al/Zn mixed oxide precursor calculated on the basis of Al₂O₃ and ZnO respectively is in the range between 60 - 50% : 40 - 50%, preferably in the range between 58 - 54% : 42 - 46%, most preferably 56% : 44%.

12. The method as claimed in any one of the preceding claims, wherein the water-insoluble Zn compound is any compound comprising Zn²⁺ ions, including zinc oxide, zinc carbonate, or zinc hydroxide carbonate, preferably zinc oxide.

13. The method as claimed in any one of the preceding claims, wherein the hydrothermal treatment of the Al/Zn mixed oxide precursor suspension is performed under autogenous pressure at a temperature between 20 and 350°C, preferably between 100 and 200°C and more preferably between 170 and 190°C.

14. The method as claimed in any one of the preceding claims, wherein the hydrothermal treatment is performed for a time between 30 minutes and 10 hours, preferably between 1 hours and 5 hours, most preferably for 1 hour.

15. The method as claimed in any one of the preceding claims, wherein the solid content of the Al/Zn mixed oxide precursor suspension is in the range of 1 - 20 wt.%, preferably in the range of 7 - 11 wt.%.

16. The method as claimed in any one of the preceding claims, wherein the mixing of the Al/Mg mixed oxide precursor suspension and the hydrothermally treated Al/Zn mixed oxide precursor suspension is performed under stirring at a temperature of between 10 and 100°C, preferably between 10 and 30°C, for 30 minutes to 3 hours, preferably for 1 hour.

17. The method as claimed in any one of the preceding claims, wherein the calcination of the Al/Mg/Zn spinel precursor is performed at a temperature between 500 and 1500°C, preferably between 500 and 700°C, more preferably at 550°C, for 1 to 24 hours, preferably for 2 to 5 hours and more preferably for 3 hours.

18. A mixed Al/Mg/Zn spinel material having the following characteristics:
i) a composition according to formula (1):
MgₓZn₁₋ₓAl₂O₄ (1)
where x is in the range between 0 and 0.99, preferably in the range between 0.1 and 0.95 and more preferably in the range between 0.55 and 0.95; and
ii) a Relative Spinel Content, R, after rehydration via hydrothermal treatment at 200°C for 2 hours, of more than 60 %, as determined by X-ray diffraction via using the equation (4): $R = \left(\frac{{X}_{cor}}{{RIR}_{cor}}\right) \left(\frac{{I}_{\left(311\right) spinel}}{{I}_{\left(113\right) cor}}\right)$ (4)
where
R is the weight fraction of spinel phase Xₛₚᵢₙₑₗ
X_{Cor} is the weight fraction of Corundum
RIR_{cor} is the Reference Intensity Ratio of Corundum
I₍₃₁₁₎ₛₚᵢₙₑₗ is the intensity of the (311) reflection for the spinel phase
I_{(113)cor} is the intensity of the (113) reflection of the Corundum phase.

19. The mixed Al/Mg/Zn spinel material as claimed in claim 18, which has impurities comprising the following elements Ca, Cr, Cu, Fe, Ga, La, Mn, Na, Ni, Si, Ti, V, Zr, Pb below 100 ppm each.

20. The mixed Al/Mg/Zn spinel material as claimed in claim 18 or claim 19, which has a surface area between 50 and 300 m²/g, preferably between 100 and 250 m²/g.

21. The mixed Al/Mg/Zn spinel material as claimed in any one of claims 18 to 20, which has a pore volume between 0.15 and 1.0 ml/g, preferably between 0.2 and 0.7 ml/g.

22. The mixed Al/Mg/Zn spinel material as claimed in any one of claims 18 to 21, which have a median pore radius of between 2.0 and 6.0 nm, preferably between 3.0 and 5.0 nm.
